# EUROPEAN PATENT APPLICATION

(11) **EP 4 566 923 A1**
(43) Date of publication of application: **11.06.2025**
(21) Application number: 24207822.8
(22) Date of filing: 21.10.2024
(51) Int. Cl.: B62D 25/08, B62D 25/20

(54) **FRONT STRUCTURE OF ELECTRIC VEHICLE**

(30) Priority: 08.12.2023 JP 2023207723
(71) Applicant: Suzuki Motor Corporation, Shizuoka 432-8611 (JP)
(72) Inventor: KISHIMOTO, Jun, HAMAMATSU-SHI, 432-8611 (JP)
(74) Representative: Plasseraud IP

(57) **Abstract**

[Problem to be Solved]

To improve the strength of a tunnel portion in a vehicle front part of an electric vehicle and distribute an impact load.

[Solution]

A front structure of an electric vehicle includes an inclined portion 11 provided in a front part of a floor portion and extending obliquely upward toward the vehicle front, and a tunnel portion 12 provided in the floor portion of the vehicle. A lower tunnel reinforcement member 50 for reinforcing the tunnel portion 12 is arranged on a lower surface side of the floor portion in a front part of the tunnel portion 12, the lower tunnel reinforcement member 50 having an L-shaped cross section and including a ridgeline portion 54 extending in the longitudinal direction. A side portion of the lower tunnel reinforcement member 50 is joined to a vertical wall portion 14 of a side portion of the tunnel portion 12, a lower portion of the lower tunnel reinforcement member 50 is joined to a floor panel 10 located on the outside in the vehicle width direction of the vertical wall portion 14, and a front portion of the lower tunnel reinforcement member 50 extends along the inclined portion 11 and is joined to a cross member 30.

## Description

### [Technical Field]

The present invention relates to a front structure of an electric vehicle.

### [Background Art]

A driving motor, a front wheel suspension structure, and the like are arranged in a front part of an electric vehicle, for example. Additionally, in an electric vehicle, a battery pack for supplying electric power to the driving motor is arranged on the lower side of a floor portion.

In the front part of an electric vehicle, rigidity and strength against an impact load of a frontal collision or the like needs to be ensured as in the case of a vehicle equipped with an internal combustion engine (hereinafter referred to as an engine vehicle). Furthermore, in an electric vehicle, a front part of a floor portion needs to have rigidity and strength to protect a battery pack when an impact load is received due to a frontal collision or the like.

As a structure for reinforcing a front part of a floor portion of an electric vehicle, as disclosed in Patent Literature 1, for example, a structure is known in which a center tunnel is provided in a floor panel, and a reinforcement is attached to an inner surface of a peripheral wall of the center tunnel. The reinforcement of this example is attached to a dash panel and extends rearward from the dash panel along the longitudinal direction of the center tunnel.

By providing the center tunnel, a part of the impact load due to a frontal collision or the like can be absorbed. However, in an electric vehicle, a battery pack is arranged on the lower side of a floor panel. For this reason, the floor panel of an electric vehicle is arranged higher than a floor panel of an engine vehicle. As a result, in an electric vehicle, the height of the center tunnel is lower than that of an engine vehicle. When the height of the center tunnel is low, the amount of energy absorbed by the center tunnel is reduced. In the structure of the above example, since the center tunnel is reinforced by providing the reinforcement, energy generated by collision can be absorbed even when the height of the center tunnel is low.

### [Citation List]

### [Patent Literature]

[Patent Literature 1] JP 2021-123229 A

### [Summary of Invention]

### [Problem to be Solved by the Invention]

On the vehicle front side of a floor portion, a certain rigidity needs to be ensured to support a driving motor or a suspension structure, for example. For this reason, a highly rigid member such as a cross member provided with a support for supporting the suspension structure, for example, may be arranged in a front part of the floor portion.

In such a structure, even in the case of providing a reinforcement extending in the longitudinal direction of the vehicle in the center tunnel (tunnel portion) as in the above example, it is desirable that the reinforcement extend linearly. However, when a reinforcement extending in the longitudinal direction of the vehicle is to be provided in the tunnel portion as in the structure of the above example, a front portion of the reinforcement needs to be curved or bent for layout purposes.

In a structure in which a curved part or a bent part is provided in the reinforcement, when an impact load due to a frontal collision or the like acts thereon, the tunnel portion may be compressed and deformed starting from the curved part or the bent part. Therefore, in the structure of the above example, there is room for improvement in ensuring the strength of the vehicle front part against an impact load due to a frontal collision or the like.

The present invention has been made to solve the above problem, and aims to provide a front structure of an electric vehicle that can improve the strength of a tunnel portion against an impact load at the time of a frontal collision to suppress deformation in a front part of a tunnel portion and effectively distribute the impact load.

### [Means for Solving the Problem]

A front structure of an electric vehicle according to the present invention for achieving the above object includes: a front side member extending to the vehicle front from an outer portion in a vehicle width direction of a front part of a floor portion of a vehicle; a cross member arranged in a front part of the floor portion and extending outward in the vehicle width direction from a rear part of the front side member; an inclined portion provided in a front part of the floor portion and extending obliquely upward toward the vehicle front; and a tunnel portion provided in the floor portion, bulging to a vehicle upper side, and extending to the vehicle rear from a front part of the floor portion, a battery pack being arranged on a lower side of the floor portion. In the front structure of an electric vehicle, a tunnel reinforcement member for reinforcing the tunnel portion is arranged on a lower surface side of the floor portion in a front part of the tunnel portion, the tunnel reinforcement member having an L-shaped cross section and including a ridgeline portion extending in a longitudinal direction of the vehicle; a side portion of the tunnel reinforcement member is joined to a vertical wall portion of a side portion of the tunnel portion; a lower portion of the tunnel reinforcement member is joined to the floor portion located on the outside in the vehicle width direction of the vertical wall portion; and a front portion of the tunnel reinforcement member extends along the inclined portion and is joined to the cross member.

### [Advantageous Effect of Invention]

According to the present invention, in a front structure of an electric vehicle, the strength of a tunnel portion against an impact load at the time of a frontal collision is improved to suppress deformation in a front part of a tunnel portion, so that the impact load can be effectively distributed.

### [Brief Description of Drawings]

[Figure 1] Figure 1 is a perspective view illustrating an embodiment of a front structure of an electric vehicle according to the present invention.
[Figure 2] Figure 2 is a side view of the front structure of Figure 1 as viewed from the outside in the vehicle width direction.
[Figure 3] Figure 3 is a perspective view of the front structure of Figure 1 as viewed from the lower surface side.
[Figure 4] Figure 4 is a perspective view of the front structure of Figure 1 as viewed from the vehicle front side.
[Figure 5] Figure 5 is a bottom view of Figure 1.
[Figure 6] Figure 6 is a cross-sectional view on arrow A-A of Figure 5.
[Figure 7] Figure 7 is a cross-sectional view on arrow B-B of Figure 5.
[Figure 8] Figure 8 is a perspective view from which a cross member of Figure 3 is omitted.
[Figure 9] Figure 9 is a perspective view from which a bracket of Figure 8 is omitted.
[Mode for Carrying Out the Invention]

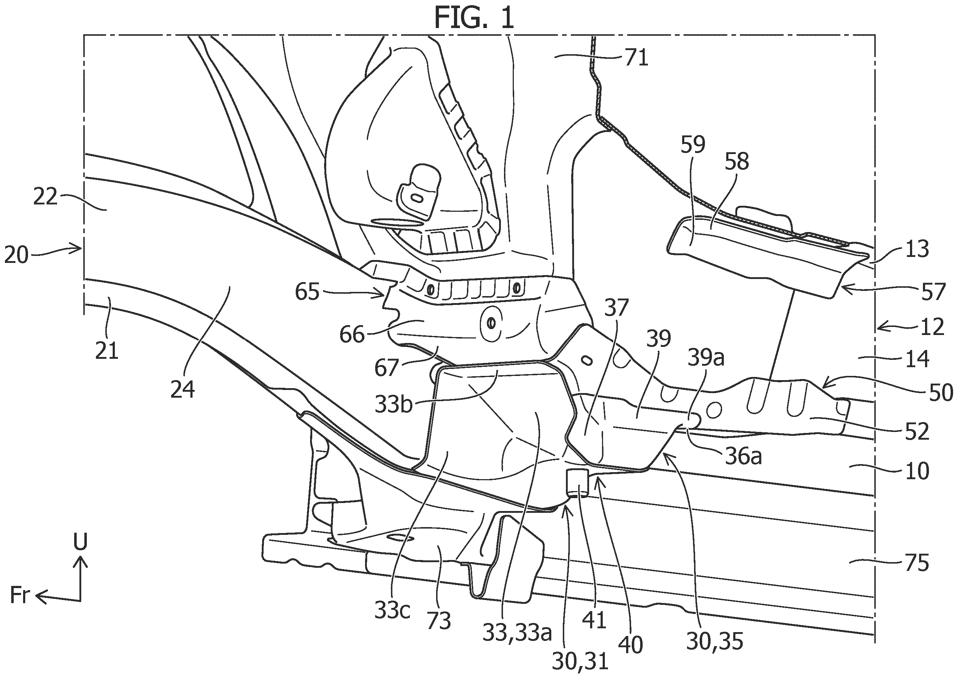

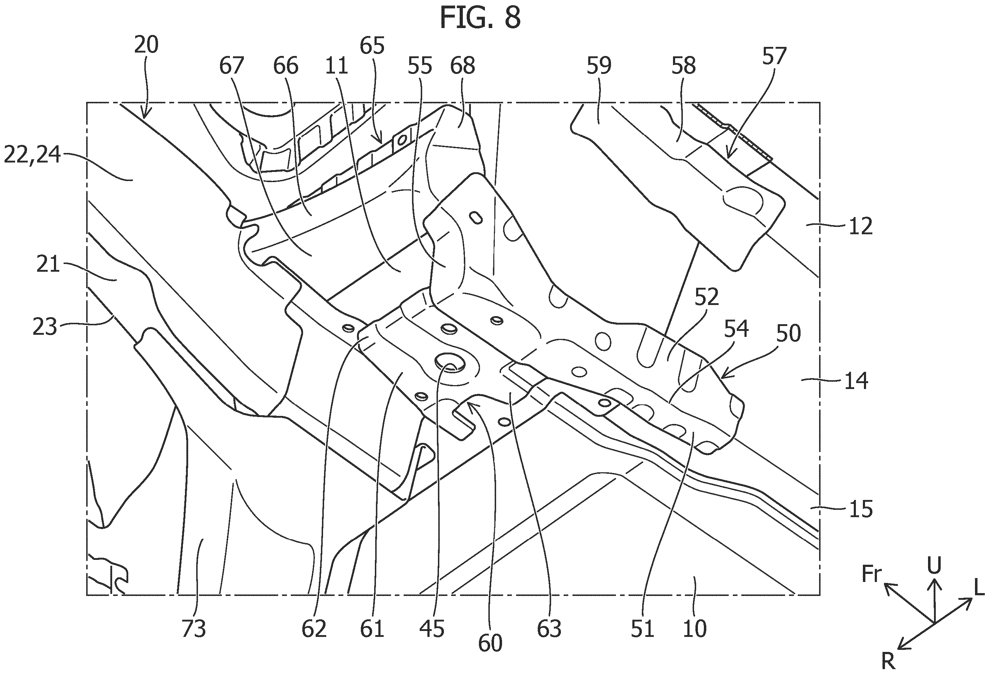

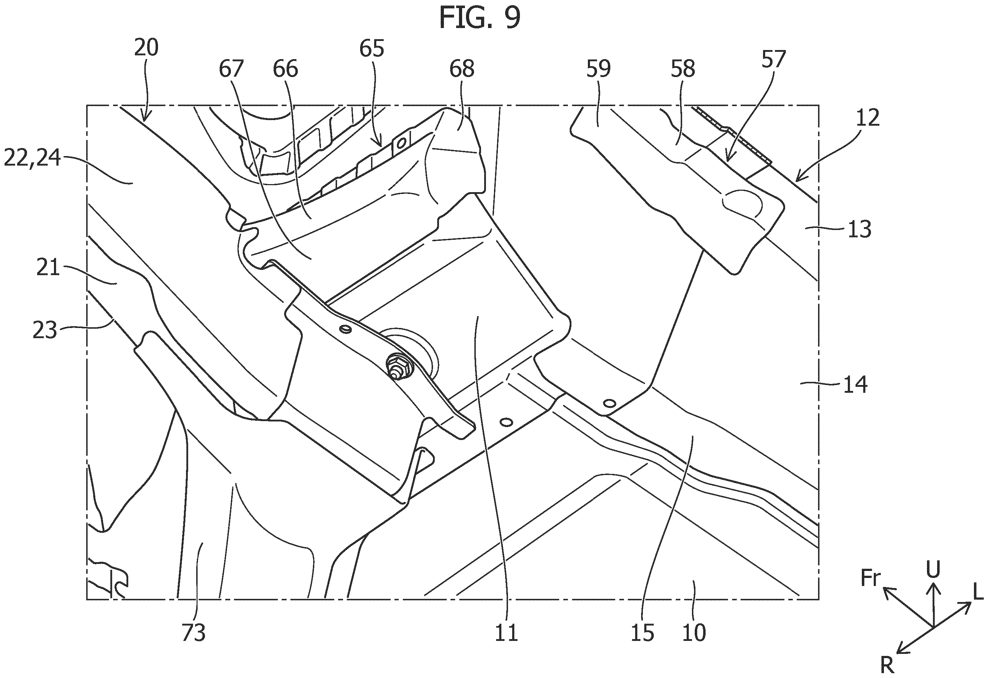

Hereinafter, an embodiment of a front structure of an electric vehicle according to the present invention will be described with reference to the drawings (Figures 1 to 9). Note that in the drawings, an arrow Fr direction indicates the front in the longitudinal direction of the vehicle. In the description of the embodiment, "front part (front end) and rear part (rear end)" correspond to the front part and the rear part in the longitudinal direction of the vehicle. In addition, an arrow R and an arrow L indicate the right side and the left side when the occupant faces the vehicle front. In addition, an arrow U indicates the upper side in the vertical direction of the vehicle.

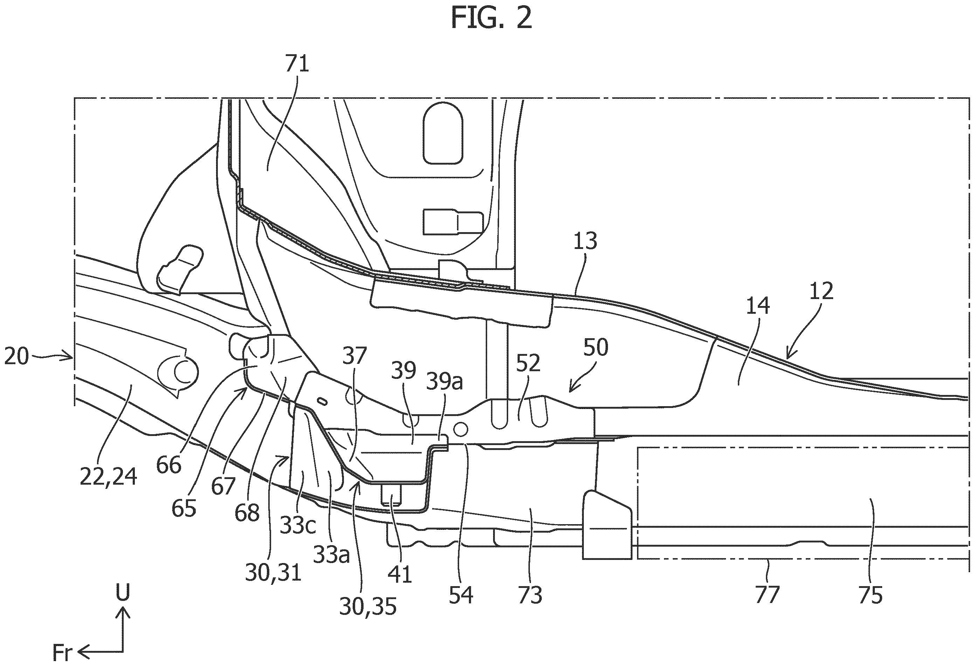

As illustrated in Figure 2, the front structure of an electric vehicle of the present embodiment includes a battery pack 77 arranged on the lower side of a floor portion of the electric vehicle. Note that in Figure 2, the approximate location of the battery pack 77 is shown virtually. Furthermore, as illustrated in Figures 1 to 5, the front structure of an electric vehicle includes a front side member 20 extending to the vehicle front from the outer lateral portion in the vehicle width direction of a front part of the floor portion, and a cross member 30 arranged in a front part of the floor portion and extending outward in the vehicle width direction from a rear part of the front side member 20. Furthermore, the front structure includes an inclined portion 11 provided in a front part of the floor portion and extending obliquely upward toward the vehicle front, and a tunnel portion 12 provided in the floor portion, bulging toward the vehicle upper side, and extending toward the vehicle rear from the front part of the floor portion.

Additionally, as illustrated in Figures 1 to 5, the front structure of the present embodiment includes tunnel reinforcement members 50, 57 for reinforcing the tunnel portion 12. Details of the tunnel reinforcement members 50, 57 will be described later.

Hereinafter, each member included in the front structure of an electric vehicle of the present embodiment will be described.

As described above, the front structure of an electric vehicle of the present embodiment includes the front side member 20 and the cross member 30, and further includes a floor panel 10 forming the floor portion, a dash panel 71, and a dash lower cross member 65. Furthermore, the front structure includes a brace 73 and a side sill 75.

The front side member 20 is a highly rigid member formed of a metal material and forming the vehicle body frame. As illustrated in Figures 1 to 3, the front side member 20 is arranged on both side portions in the vehicle width direction of the front part of the vehicle, and is arranged on both sides in the vehicle width direction of a power house in which the driving motor is arranged, for example.

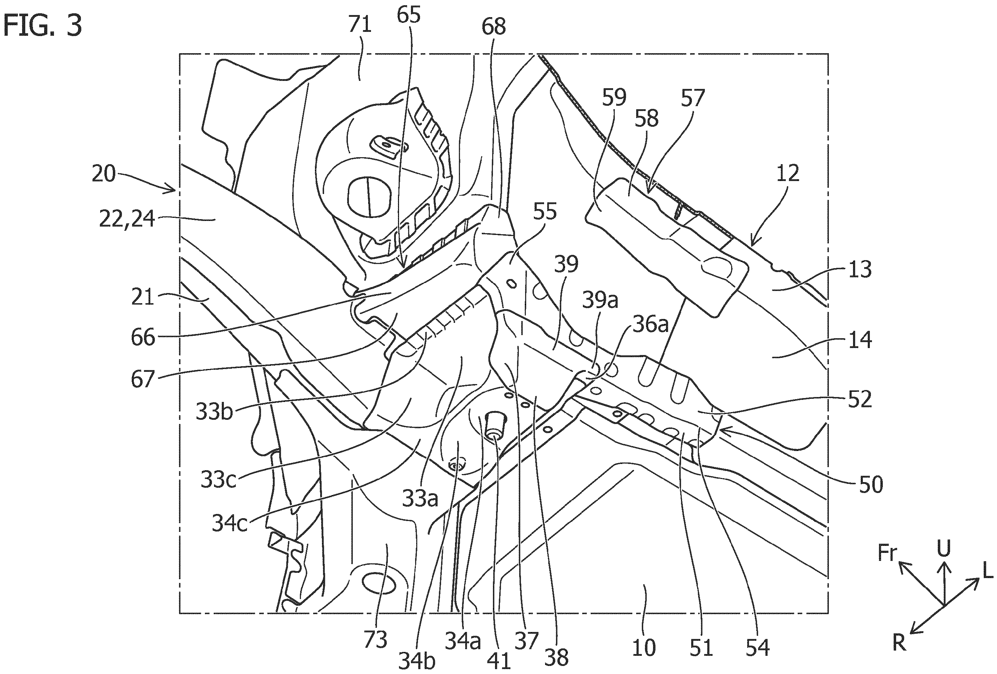

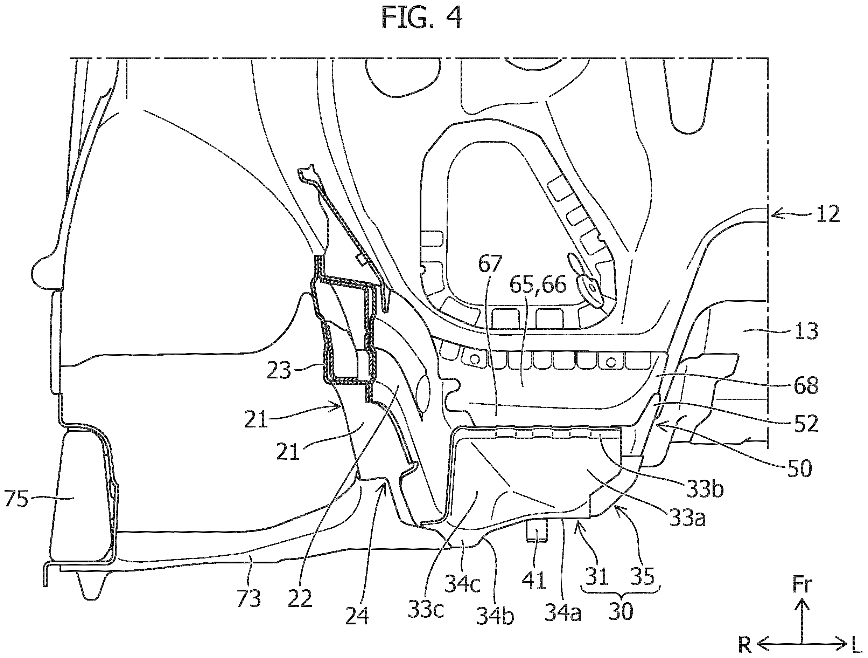

Furthermore, as illustrated in Figures 3 and 4, the front side member 20 includes a bottom surface portion 21, an inner wall portion 22, an outer wall portion 23, and an upper surface portion (not illustrated), and has a substantially rectangular cross section. The front side member 20 extends toward the vehicle front from the front part of the floor portion. The cross member 30 is joined by spotwelding, for example, to a rear part of the inner wall portion 22 of the front side member 20. As illustrated in Figure 2, the front side member 20 includes a member inclined portion 24 that extends obliquely toward the vehicle upper side toward the vehicle front from slightly forward of a joining part with the cross member 30. The height of the rear end of the member inclined portion 24 is substantially the same as the heights of the cross member 30 and the side sill 75, and the front end of the member inclined portion 24 is arranged closer to the vehicle upper side than the dash lower cross member 65 described later.

Similarly to the front side member 20, the cross member 30 is a highly rigid member formed of a metal material and forming the vehicle body frame. Additionally, as illustrated in Figure 1 and Figures 3 to 5, the cross member 30 is arranged in a front part of the floor portion and extends in the vehicle width direction so as to connect a rear part of the front side member 20 and a front part of a side portion of the tunnel portion 12. The cross member 30 of the present embodiment includes an outer member 31 and an inner member 35. One cross member 30 is formed by joining the outer member 31 and the inner member 35 to each other.

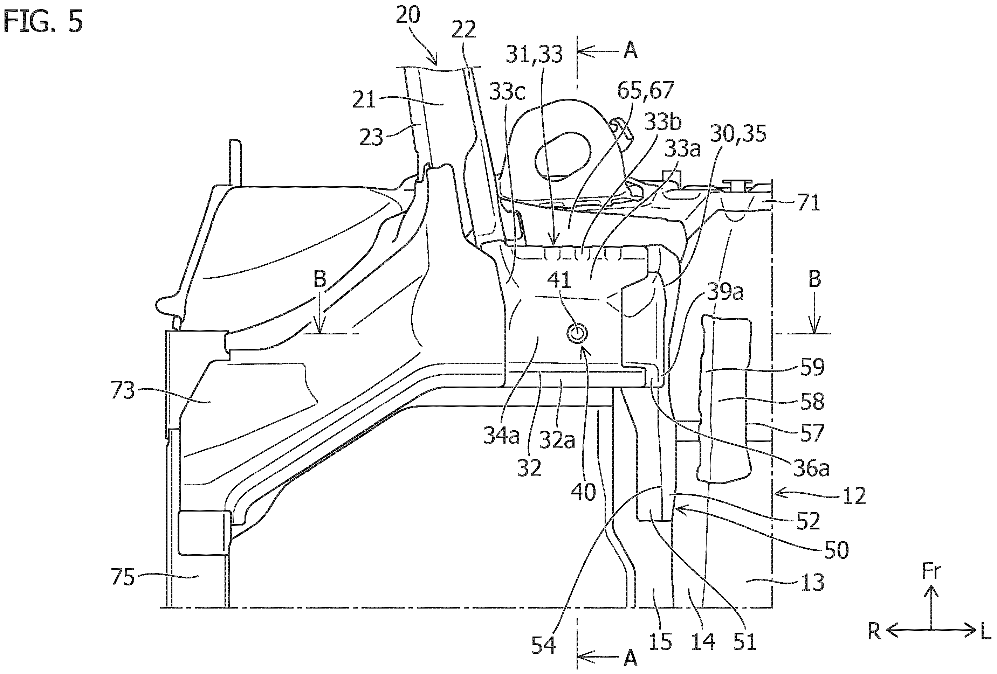

As illustrated in Figures 5 to 7, the outer member 31 of the cross member 30 is a hollow member and includes a rear wall portion 32, a front wall portion 33, and bottom surface portions 34a, 34b, 34c. The rear wall portion 32 faces the vehicle rear, includes a vertical wall surface extending perpendicularly, and extends in the vehicle width direction.

As illustrated in Figure 1 and Figures 3 and 4, the front wall portion 33 of the outer member 31 of the cross member 30 includes a forward-inclined surface 33a and an outer inclined surface 33c. The forward-inclined surface 33a of the outer member 31 is located in an inner portion in the vehicle width direction of the front wall portion 33, is inclined toward the vehicle upper side toward the vehicle front, and extends in the vehicle width direction.

The outer inclined surface 33c of the outer member 31 is arranged on the outside in the vehicle width direction of the forward-inclined surface 33a, and extends while being inclined outward in the vehicle width direction and upward toward the vehicle front from an outer end of the forward-inclined surface 33a. In an upper part of the front wall portion 33 of the outer member 31, that is, a front end portion located in an upper part of the forward-inclined surface 33a, a front flange portion 33b protruding toward the vehicle front from the front end portion and extending in the vehicle width direction is provided. The front flange portion 33b is joined to the inner wall portion 22 of the front side member 20 by spotwelding.

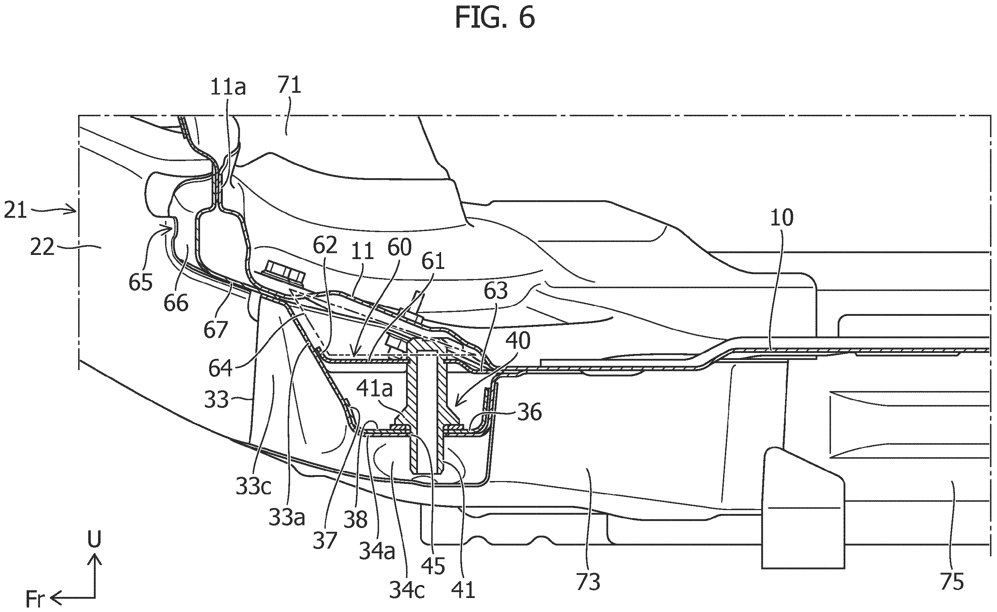

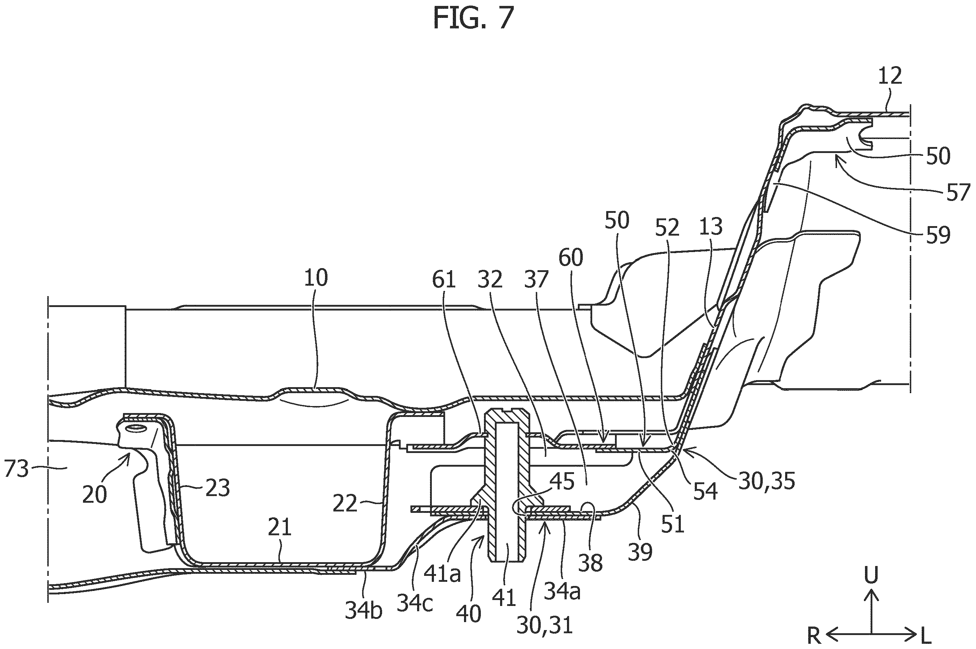

As illustrated in Figures 3 and 5, the bottom surface portions 34a, 34b, 34c of the outer member 31 of the cross member 30 connect a lower part of the front wall portion 33 and a lower part of the rear wall portion 32 and extend in the vehicle width direction. The bottom surface portions 34a, 34b, 34c include an inner bottom surface portion 34a, an outer bottom surface portion 34b, and an inclined connection portion 34c connecting these components. As illustrated in Figures 6 and 7, the inner bottom surface portion 34a is arranged on the inside in the vehicle width direction in a lower part of the outer member 31, extends in the vehicle width direction, and is located higher than the outer bottom surface portion 34b. The outer bottom surface portion 34b is arranged on the outside in the vehicle width direction of the inner bottom surface portion 34a, and is joined to the bottom surface portion 21 of the front side member 20 by spotwelding.

The inclined connection portion 34c extends obliquely toward the vehicle upper side toward the outside in the vehicle width direction, so as to connect the outer end of the inner bottom surface portion 34a and the inner end of the outer bottom surface portion 34b. In this example, the front end of the inclined connection portion 34c is connected to the lower end of the outer inclined surface 33c.

As described above, the front flange portion 33b is provided in an upper portion of the front wall portion 33 of the outer member 31, and a rear flange portion 32a protruding to the vehicle rear and extending in the vehicle width direction is provided in an upper portion of the rear wall portion 32 of the outer member 31. The front flange portion 33b and the rear flange portion 32a are joined to a lower surface of the floor panel 10 forming the floor portion by spotwelding, for example.

As illustrated in Figures 1 to 6, the inner member 35 of the cross member 30 is a hollow member, and includes a rear wall portion 36, a front wall portion 37, a bottom surface portion 38, and an inner wall portion 39. The rear wall portion 36 of the inner member 35 is joined to a front surface side of the rear wall portion 32 of the outer member 31. The inner portion in the vehicle width direction of the rear wall portion 36 protrudes upward (Figure 7). A rear flange portion 36a protruding rearward is provided at the upper end of the protruding part of the rear wall portion 36 (Figure 5).

The bottom surface portion 38 of the inner member 35 is joined to the upper surface side of the outer portion of the inner bottom surface portion 34a of the outer member 31. The inner wall portion 39 of the inner member 35 extends obliquely upward toward the vehicle width direction from an outer end of the bottom surface portion 38 of the inner member 35, faces the inside in the vehicle width direction and the lower side, and forms an inner wall of the cross member 30. A rear protrusion portion 39a protruding to the rear is provided in an upper portion of the inner wall portion 39 of the inner member 35. The rear flange portion 36a and the rear protrusion portion 39a of the inner member 35 extend along a ridgeline portion 54 of a lower tunnel reinforcement member 50, described later, are arranged so as to cover the ridgeline portion 54, and are joined to a front part of a lower surface portion 51 and a front part of an inner surface portion 52 of the lower tunnel reinforcement member 50, respectively.

Here, the floor portion will be described. The floor portion of the present embodiment is a floor portion of a front part of the vehicle interior. As illustrated in Figures 5 to 7, the side sill 75 is arranged on the outside portion in the vehicle width direction of the floor portion. The side sill 75 is a highly rigid member forming the vehicle body frame, and is formed of a metal material. The side sill 75 is arranged on the outside in the vehicle width direction of a lower part of the vehicle body, and extends in the longitudinal direction of the vehicle. In this example, the side sill 75 is joined to a lower surface of an outer portion in the vehicle width direction of the floor panel 10.

As illustrated in Figures 3 to 6, the brace 73 arranged in a front part of the floor portion is joined to a front part of the side sill 75. The brace 73 is a member that extends obliquely inward in the vehicle width direction toward the vehicle front, and is a highly rigid member forming the vehicle body frame as is the side sill 75. An outer portion in the vehicle width direction of the brace 73 is joined to a front part of the side sill 75, and an inner portion in the vehicle width direction of the brace 73 is joined to the outer wall portion 23 and the bottom surface portion 21 of the front side member 20. An inner portion in the vehicle width direction of a lower part of the brace 73 is joined to the outer bottom surface portion 34b of the cross member 30 by spotwelding. In the present embodiment, an outer portion in the vehicle width direction of the cross member 30, a rear part of the front side member 20, and an inner portion in the vehicle width direction of the brace 73 are joined together to ensure the rigidity of a lower part of the vehicle body. Additionally, an upper part of the brace 73 is joined to the floor panel 10.

Furthermore, as described above the inclined portion 11 is provided in the front part of the floor portion, and the tunnel portion 12 is provided in an intermediate portion in the vehicle width direction of the floor portion. As illustrated in Figures 6 to 9, the inclined portion 11 is provided in the front part of the floor portion, and is inclined upward toward the vehicle front. A lower part of the dash panel 71 is joined to an upper part of the inclined portion 11. The dash panel 71 is a panel that separates the vehicle interior and the power house, and is formed of a metal material.

As illustrated in Figures 1 to 5, the tunnel portion 12 is provided at the center in the vehicle width direction of the floor portion, bulges to the vehicle upper side from an upper surface of the floor portion located on the outside in the vehicle width direction of the tunnel portion 12, and extends to the vehicle rear from the inclined portion 11. An upper part of the front end of the tunnel portion 12 is joined to a rear surface of the dash panel 71.

As illustrated in Figures 3 to 5, the floor panel 10 is arranged on the outside in the vehicle width direction of the tunnel portion 12. The left and right floor panels 10 connect the tunnel portion 12 and the side sill 75 arranged in an outer portion in the vehicle width direction of the floor portion, and extend in the longitudinal direction of the vehicle.

As illustrated in Figure 3, the tunnel portion 12 includes vertical wall portions 14 arranged on both left and right sides, and a top surface portion 13 connecting the upper ends of the left and right vertical wall portions 14. The vertical wall portion 14 is a wall portion extending to the vehicle upper side from the inner end of the floor panel 10, and extends in the longitudinal direction of the vehicle along the inner end of the floor panel 10. Note that Figure 3 illustrates the right vertical wall portion 14. A lower flange portion 15 protruding outward in the vehicle width direction is provided at the lower end of the vertical wall portion 14. The lower flange portion 15 is joined to the lower surface side, for example, of an inner portion of the floor panel 10 by spotwelding, for example. Additionally, as illustrated in Figure 2, a front part of the lower end of the vertical wall portion 14 of the tunnel portion 12 is inclined in a direction corresponding to the inclination of the inclined portion 11 of the floor portion. As illustrated in Figure 3, the top surface portion 13 connects the upper ends of the left and right vertical wall portions 14 and extend in the longitudinal direction of the vehicle.

Note that the cross sections illustrated in Figures 1 to 5 represent cross sections in a vertical plane arranged along a line in the longitudinal direction of the vehicle passing through an intermediate portion (approximately the center portion) in the vehicle width direction of the top surface portion 13.

Furthermore, the front structure of the present embodiment includes the tunnel reinforcement members 50, 57 for reinforcing the tunnel portion 12. As illustrated in Figures 1 to 3, the tunnel reinforcement members 50, 57 of the present embodiment include an upper tunnel reinforcement member 57 and the lower tunnel reinforcement member 50.

As illustrated in Figure 3, the upper tunnel reinforcement member 57 is provided on the back of a corner formed by the outer end of the top surface portion 13 of the tunnel portion 12 and the upper end of the vertical wall portion 14. The upper tunnel reinforcement member 57 is a member that extends in the longitudinal direction of the vehicle as a whole, and includes an upper surface portion 58 and an outer surface portion 59 extending downward from the outer end of the upper surface portion 58. The upper tunnel reinforcement member 57 has an L-shaped cross section.

The upper surface portion 58 faces upward and extends in the longitudinal direction of the vehicle. The upper surface portion 58 is joined to a lower surface side of the top surface portion 13 of the tunnel portion 12 by spotwelding, for example. The outer surface portion 59 faces the outside in the vehicle width direction, and extends in the longitudinal direction of the vehicle. The outer surface portion 59 is joined to an upper part of an inner surface of the vertical wall portion 14 of the tunnel portion 12 by spotwelding, for example.

As illustrated in Figures 1 to 3 and Figure 5, the lower tunnel reinforcement member 50 is arranged in a front part of the tunnel portion 12 on a lower surface side of the floor portion. Additionally, the lower tunnel reinforcement member 50 has an L-shaped cross section, and includes the ridgeline portion 54 extending in the longitudinal direction of the vehicle. A side portion of the lower tunnel reinforcement member 50 of the present embodiment is joined to the vertical wall portion 14 of a side portion of the tunnel portion 12, a lower portion of the lower tunnel reinforcement member 50 is joined to the floor portion located on the outside in the vehicle width direction of the vertical wall portion 14, and a front portion of the lower tunnel reinforcement member 50 extends along the inclined portion 11 and is joined to the cross member 30. Hereinafter, the lower tunnel reinforcement member 50 will be described in detail.

As illustrated in Figures 1 to 3, the lower tunnel reinforcement member 50 is provided below a corner formed by a lower part of the vertical wall portion 14 of the tunnel portion 12 and the lower flange portion 15 provided at the lower end of the vertical wall portion 14. The lower tunnel reinforcement member 50 is a member that extends, as a whole, in the longitudinal direction of the vehicle, and includes the lower surface portion 51, the inner surface portion 52 extending upward from the inner end of the lower surface portion 51, and a front surface portion 55.

As illustrated in Figure 3, the lower surface portion 51 faces the vehicle lower side and extends in the longitudinal direction of the vehicle. The lower surface portion 51 is joined to the floor portion arranged on the outside in the vehicle width direction of the vertical wall portion 14 of the tunnel portion 12. To be specific, the lower surface portion 51 is joined to the lower flange portion 15 provided at the lower end of the vertical wall portion 14 by spotwelding, and in this example, the lower surface portion 51, the lower flange portion 15, and an inner end portion in the vehicle width direction of the floor panel 10 are placed one atop another and are joined together.

As illustrated in Figures 2 and 3, the inner surface portion 52 faces inward in the vehicle width direction and extends in the longitudinal direction of the vehicle. The inner surface portion 52 is joined to a lower part of an inner surface of the vertical wall portion 14 of the tunnel portion 12 by spotwelding, for example. Additionally, the lower tunnel reinforcement member 50 is provided with the ridgeline portion 54 extending in the longitudinal direction of the vehicle at a part (boundary part) in which the lower surface portion 51 and the inner surface portion 52 are connected. For example, the ridgeline portion 54 extends parallel to the ridgeline of a corner formed by a lower part of the vertical wall portion 14 of the tunnel portion 12 and the lower flange portion 15.

As illustrated in Figures 2 and 6, the upper end of the inner surface portion 52 corresponding to the inclined portion 11 in the front part of the floor portion is inclined along the inclined portion 11. That is, the upper end of the front part of the inner surface portion 52 extends obliquely upward toward the vehicle front. Additionally, the lower surface portion 51 (front part of lower surface portion 51) located below the inclined portion 11 extends toward the vehicle front, and the rear flange portion 32a of the outer member 31 of the cross member 30 and the rear flange portion 36a of the inner member 35 are joined to the lower surface portion 51, for example.

As illustrated in Figures 3 and 4, the front surface portion 55 extends to the vehicle upper side from the front end of the lower surface portion 51. An inner portion in the vehicle width direction of the front flange portion 33b of the forward-inclined surface 33a of the cross member 30 is joined to an upper part of the front surface portion 55 by spotwelding, for example, and similarly, an inner portion in the vehicle width direction of the forward-inclined surface 33a is joined to a lower part of the front surface portion 55.

Since the ridgeline portion 54 of the lower tunnel reinforcement member 50 located below the inclined portion 11 of the floor portion extends linearly toward the vehicle front from the ridgeline portion 54 on the vehicle rear side of the inclined portion 11, rigidity and strength in the longitudinal direction of the vehicle can be ensured. Hence, when an impact load due to a frontal collision or the like acts on a front part of the vehicle, for example, deformation of the tunnel portion 12 by the impact load can be suppressed, and the impact load can be effectively distributed.

Furthermore, as illustrated in Figures 6 to 8, in the present embodiment, a plate-shaped bracket 60 formed by a metal material is provided on the inside of the cross member 30, and front and rear parts of the bracket 60 are joined to the cross member 30. The bracket 60 includes a main body portion 61, a front flange portion 62, and a rear flange portion 63.

As illustrated in Figures 6 to 8, the main body portion 61 has a horizontally arranged plate shape, and is arranged on the lower side of the inclined portion 11 provided in a front part of the floor panel 10. An upper surface of the main body portion 61 is spaced apart from a lower surface of the inclined portion 11 in the vertical direction of the vehicle. Note that the vertical length of the spacing increases toward the vehicle front. An inner portion in the vehicle width direction of the main body portion 61 is joined to the lower surface portion 51 of the lower tunnel reinforcement member 50. An outer portion of the main body portion 61 is spaced apart from the inner wall portion 22 of the front side member 20 on the inside in the vehicle width direction.

As illustrated in Figure 6, the front flange portion 62 of the bracket 60 protrudes obliquely upward from the front end of the main body portion 61 toward the vehicle front, and extends in the vehicle width direction so as to connect left and right ends to the front end of the main body portion 61. The front flange portion 62 is joined to a rear surface of the forward-inclined surface 33a of the cross member 30 by spotwelding, for example. In addition, an inner portion in the vehicle width direction of the front flange portion 62 of the bracket 60 is joined to the front surface portion 55 of the lower tunnel reinforcement member 50.

As illustrated in Figure 6, the rear flange portion 63 of the bracket 60 is a part protruding to the vehicle rear from the rear end of the main body portion 61, and is joined to a lower surface of the floor panel 10 located behind the inclined portion 11, that is, to a front part of a flat portion of the floor panel 10. Furthermore, a rear part of the cross member 30 is joined to the rear flange portion 63 of the bracket 60, for example. In this example, the rear flange portion 32a of the outer member 31 is joined to the rear flange portion 63 by spotwelding, for example.

By providing the bracket 60 in the cross member 30, the forward-inclined surface 33a of the cross member 30 and a front end portion of the lower tunnel reinforcement member 50 can be reinforced. Additionally, the bracket 60 is arranged horizontally along the ridgeline portion 54, and is joined to the lower surface portion 51 of the lower tunnel reinforcement member 50. Hence, rigidity and strength in the longitudinal direction of the vehicle in the lower tunnel reinforcement member 50 can be improved. As a result, when an impact load due to a frontal collision or the like acts on a front part of the vehicle, it is possible to enhance the effect of reducing deformation of the tunnel portion 12 due to the impact load.

Furthermore, a suspension attachment portion 40 to which a suspension structure (not illustrated) is attached is provided in a lower part of the cross member 30 of the present embodiment. As illustrated in Figures 3, 5, and 6, a nut 41 extending in the vertical direction of the vehicle is arranged in the suspension attachment portion 40 so as to penetrate a lower part of the cross member 30 and the bracket 60 in the vertical direction of the vehicle.

As illustrated in Figures 6 and 7, the suspension attachment portion 40 of the present embodiment includes the inner bottom surface portion 34a of the outer member 31 of the cross member 30, the bottom surface portion 38 of the inner member 35 of the cross member 30, and the main body portion 61 of the bracket 60. A through hole 45 penetrating in the vertical direction of the vehicle is formed in the inner bottom surface portion 34a of the outer member 31, the bottom surface portion 38 of the inner member 35, and the main body portion 61 of the bracket 60. These through holes 45 communicate with one another, and the nut 41 is arranged so as to penetrate these through holes 45.

An engaging portion 41a engaged with and supported by the edge of the through holes 45 is provided in a side portion of the nut 41. The suspension structure is attached to the nut 41 protruding downward from the through hole 45 of the inner bottom surface portion 34a of the outer member 31.

Furthermore, as illustrated in Figure 6, in the present embodiment, the front wall portions 33, 37 of the cross member 30, the bracket 60, and the inclined portion 11 of the floor portion form a closed cross-sectional structure 64 that has a triangular cross-section in side view and extends in the vehicle width direction. Here, the triangle is a virtual triangle, and includes those of which the sides are not perfectly straight. A front part of the lower tunnel reinforcement member 50 is arranged at the vehicle widthwise end of the closed cross-sectional structure 64, and the length of the lower tunnel reinforcement member 50 in the vertical direction of the vehicle is formed to increase upward toward the vehicle front.

In this example, the closed cross-sectional structure 64 is provided inside the cross member 30, and a triangular cross-section is formed by the forward-inclined surface 33a of the front wall portion 33 of the outer member 31 of the cross member 30, the main body portion 61 of the bracket 60, and the inclined portion 11 of the floor panel 10. The triangular closed cross-sectional structure 64 extends in the vehicle width direction.

Additionally, a front part of the inner surface portion 52 and the front surface portion 55 of the lower tunnel reinforcement member 50 are arranged in a vehicle widthwise end portion of the closed cross-sectional structure 64. Here, the length in the vertical direction of the vehicle of the front part of the inner surface portion 52 of the lower tunnel reinforcement member 50 is formed to increase upward toward the vehicle front.

A relatively large load acts on the suspension attachment portion 40 supporting the heavy suspension structure. In addition, since the bracket 60 is joined to surrounding members, rigidity of the periphery of the bracket 60 is improved. Hence, it is possible to stably support the heavy suspension structure.

For example, in the direction of shear forces acting on the lower tunnel reinforcement member 50, the suspension attachment portion 40 can take the load. As a result, deformation in the vehicle width direction is reduced, and the attachment rigidity of the suspension structure is improved. This improves rigidity and further reduces degradation of operability because changes in the position of the nut 41 are suppressed by loads in the vehicle width direction, such as when the vehicle turns to the left or to the right.

Furthermore, as described above, the dash panel 71 of the present embodiment is arranged in a front part of the floor portion and is joined to an upper part of the inclined portion 11 of the floor panel 10 forming the floor portion. As illustrated in Figures 1 to 4, the dash lower cross member 65 extending in the vehicle width direction so as to connect the rear part of the front side member 20 and the front surface portion 55 (front part) of the lower tunnel reinforcement member 50 is arranged in a lower part of the dash panel 71. The dash lower cross member 65 is arranged so as to be continuous with the upper side and front side of the triangular closed cross-sectional structure 64.

The dash lower cross member 65 includes a front surface portion 66, a lower surface portion 67, and an inner surface portion 68. The lower surface portion 67 is joined to an upper part of the forward-inclined surface 33a by spotwelding. A lower part of the inner surface portion 68 is joined to a front part of the inner surface portion 52 of the lower tunnel reinforcement member 50. An upper part of the front surface portion 66 is joined to a front wall portion 11a provided in a lower part of the dash panel 71 and an upper part of the inclined portion 11 of the floor panel 10.

By providing the dash lower cross member 65 in the above manner, it is possible to improve surface rigidity of a lower part of the dash panel 71 located on the front side of the tunnel portion 12, and as a result, concentration of load on the tunnel portion 12 can be reduced. Furthermore, according to this structure, at the time of a frontal collision, for example, deformation of the tunnel portion 12 in a bending direction can be suppressed.

Note that since the lower tunnel reinforcement member 50 of the present embodiment is a member including the linearly extending ridgeline portion 54, formability is improved and more stable yield during manufacturing can be achieved.

The description of the present embodiment is an example for illustrating the present invention and does not limit the invention as claimed in the claims. The configuration of each part of the present invention is not limited to the above embodiment, and various changes can be made within the technical scope of the claims.

For example, while the cross member 30 of the present embodiment is formed of two members, the invention is not limited thereto. The cross member 30 may be formed of a single member.

### [Reference Signs List]

- 10: Floor panel
- 11: Inclined portion
- 11a: Front wall portion
- 12: Tunnel portion
- 13: Top surface portion
- 14: Vertical wall portion
- 15: Lower flange portion
- 20: Front side member
- 21: Bottom surface portion
- 22: Inner wall portion
- 23: Outer wall portion
- 30: Cross member
- 31: Outer member
- 32: Rear wall portion
- 32a: Rear flange portion
- 33: Front wall portion
- 33a: Forward-inclined surface
- 33b: Front flange portion
- 33c: Outer inclined surface
- 34a: Inner bottom surface portion
- 34b: Outer bottom surface portion
- 34c: Inclined connection portion
- 35: Inner member
- 36: Rear wall portion
- 36a: Rear flange portion
- 37: Front wall portion
- 38: Bottom surface portion
- 39: Inner wall portion
- 39a: Rear protrusion portion
- 40: Suspension attachment portion
- 41: Nut
- 41a: Engaging portion
- 50: Lower tunnel reinforcement member
- 51: Lower surface portion
- 52: Inner surface portion
- 54: Ridgeline portion
- 55: Front surface portion
- 57: Upper tunnel reinforcement member
- 58: Upper surface portion
- 59: Outer surface portion
- 60: Bracket
- 61: Main body portion
- 62: Front flange portion
- 63: Rear flange portion
- 64: Closed cross-sectional structure
- 65: Dash lower cross member
- 66: Front surface portion
- 67: Lower surface portion
- 68: Inner surface portion
- 71: Dash panel
- 73: Brace
- 75: Side sill
- 77: Battery pack

## Claims

1. A front structure of an electric vehicle comprising: a front side member extending to the vehicle front from an outer portion in a vehicle width direction of a front part of a floor portion of a vehicle; a cross member arranged in a front part of the floor portion and extending outward in the vehicle width direction from a rear part of the front side member; an inclined portion provided in a front part of the floor portion and extending obliquely upward toward the vehicle front; and a tunnel portion provided in the floor portion, bulging to a vehicle upper side, and extending to the vehicle rear from a front part of the floor portion, a battery pack being arranged on a lower side of the floor portion, **characterized in that**:
a tunnel reinforcement member for reinforcing the tunnel portion is arranged on a lower surface side of the floor portion in a front part of the tunnel portion, the tunnel reinforcement member having an L-shaped cross section and including a ridgeline portion extending in a longitudinal direction of the vehicle;
a side portion of the tunnel reinforcement member is joined to a vertical wall portion of a side portion of the tunnel portion;
a lower portion of the tunnel reinforcement member is joined to the floor portion located on the outside in the vehicle width direction of the vertical wall portion; and
a front portion of the tunnel reinforcement member extends along the inclined portion and is joined to the cross member.

2. The front structure of an electric vehicle according to claim 1, wherein
a plate-shaped bracket is provided inside the cross member, and
front and rear parts of the bracket are joined to the cross member.

3. The front structure of an electric vehicle according to claim 2, wherein
a suspension attachment portion to which a suspension structure is attached is provided in a lower part of the cross member, and
a nut extending in a vertical direction of the vehicle is arranged in the suspension attachment portion so as to penetrate a lower part of the cross member and the bracket in the vertical direction of the vehicle.

4. The front structure of an electric vehicle according to claim 2 or claim 3, wherein
a front wall portion of the cross member, the bracket, and the inclined portion of the floor portion form a structure that has a triangular cross-section in side view and extends in the vehicle width direction, and
a front part of the tunnel reinforcement member is arranged at a vehicle widthwise end of the structure, and a length in the vertical direction of the vehicle of the tunnel reinforcement member is formed to increase upward toward the vehicle front.

5. The front structure of an electric vehicle according to claim 4, wherein:
a dash panel is arranged in a front part of the floor portion, an upper part of the inclined portion being joined to the dash panel;
a dash lower cross member extending in the vehicle width direction so as to connect a rear part of the front side member and a front part of the tunnel reinforcement member is arranged in a lower part of the dash panel; and
the dash lower cross member is arranged so as to be continuous with the upper side and front side of the structure.
